# EUROPÄISCHE PATENTANMELDUNG

(11) **EP 4 588 388 A1**
(43) Veröffentlichungstag der Anmeldung: **23.07.2025**
(21) Anmeldenummer: 25151691.0
(22) Anmeldetag: 14.01.2025
(51) Int. Cl.: A42C 2/00, B29C 44/34

(54) **HELM**

(30) Priorität: 17.01.2024 DE 102024101336
(71) Anmelder: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(57) **Zusammenfassung**

Ein Helm, bei dem es sich etwa um einen Sporthelm oder einen Arbeitsschutzhelm handeln kann, umfasst einen Helmkörper aus zumindest einem ersten Material und einem von dem ersten Material verschiedenen zweiten Material. Der Helmkörper umfasst dabei zum einen einen festen Schaum aus expandierten Schaumpartikeln des ersten Materials und zum anderen Partikel des zweiten Materials, die mit zumindest einigen der expandierten Schaumpartikel des ersten Materials eine haftende Verbindung aufweisen, insbesondere stoffschlüssig verbunden sind.

## Beschreibung

Die Erfindung betrifft einen Helm, insbesondere einen Sporthelm oder einen Arbeitsschutzhelm.

Ein derartiger Helm dient zum Schutz des jeweiligen Trägers des Helms gegen Kopfverletzungen im Falle eines Sturzes oder eines Anpralls eines Objekts an den Kopf des Trägers. Je nach Anwendung kann der Schutzhelm als Sporthelm oder Arbeitsschutzhelm dienen und ausgebildet sein, beispielsweise als Fahrradhelm oder Reithelm. Insbesondere bei einer Anwendung als Fahrradhelm kann der Helm eine oder mehrere Belüftungsöffnungen aufweisen, um eine passive Kühlung des Kopfes des Trägers durch Umgebungsluft oder Fahrtwind zu unterstützen.

Der Helm umfasst typischerweise einen Helmkörper, der eine zumindest im Wesentlichen (beispielsweise lediglich von den genannten Belüftungsöffnungen abgesehen) konkav geformte Innenseite, die bei aufgesetztem Helm dem Kopf des Trägers des Helms zugewandt ist, und eine dazu entgegengesetzte, zumindest im Wesentlichen konvex geformte Außenseite aufweist. Der Helmkörper ist hinsichtlich Form, Dicke und Material dazu ausgelegt, die bei einem Stoß (Aufprall oder Anprall) auf den Helm einwirkende kinetische Energie durch inelastische und/oder elastische Verformung möglichst weitgehend zu absorbieren. Derartige stoßabsorbierende Eigenschaften können sich insbesondere daraus ergeben, dass der Helmkörper aus einem festen Schaum ausgebildet ist.

Es ist üblich, den Helmkörper nach der sogenannten Inmold-Technik durch Hinterspritzen einer zuvor gesondert hergestellten äußeren Helmschale auszubilden. Grundsätzlich kann der Helmkörper aber auch unabhängig von einer Helmschale als Formkörper aus festem Schaum hergestellt werden. Der feste Schaum wird dabei durch Expandieren von Schaumpartikeln eines geeigneten Materials innerhalb einer definierten Form ausgebildet. Grundsätzlich kann der Helmkörper vollständig durch den festen Schaum gebildet werden. Der Helmkörper besteht dann vollständig aus dem Material des festen Schaums, so dass sich seine Eigenschaften im Wesentlichen aus denen des geschäumten Materials ergeben. Es kann aber erstrebenswert sein, dass der Helmkörper Eigenschaften aufweist oder Funktionen erfüllt, die mittels eines einzelnen Materials nicht wirklich werden können.

So kann es etwa zweckmäßig sein, verschiedene Bereiche des Helmkörpers aus verschiedenen Materialien auszubilden. Zum Beispiel kann der Helmkörper mehrere Lagen umfassen, die unterschiedlich komprimierbar oder scherbar sind, um Stoß- bzw. Scherkräfte unterschiedliche Art oder Größenordnung absorbieren zu können; oder der Helmkörper kann an seiner Innenseite Polsterungsabschnitte für einen angenehmen Sitz auf dem Kopf des jeweiligen Trägers aufweisen; zur mechanischen Verstärkung kann der Helmkörper eine Bewehrungsstruktur, an der der stoßabsorbierenden feste Schaum angeordnet ist, oder sonstige verstärkende Elemente umfassen, die in den Schaum eingebettet sind.

Um vorteilhafte Eigenschaften verschiedener Materialien zu vereinen, kann der Helmkörper aus mehreren separat hergestellten Teilen unterschiedlichen Materials ausgebildet werden, die nach ihrer Herstellung aneinander befestigt werden. Allerdings sorgt das Herstellen mehrerer separater Teile aus verschiedenen Materialien, die nach ihrer Herstellung miteinander verbunden werden, für einen vergleichsweise hohen Aufwand bei der Fertigung des Helms. Zudem sind die Verbindungen zwischen den separat hergestellten Teilen unter Umständen nicht so stabil wie die jeweiligen Teile in sich, was die Sicherheit des Helms beeinträchtigen kann.

Es ist eine Aufgabe der Erfindung, einen Helm der genannten Art bereitzustellen, der sich einfach herstellen lässt und dabei bei hoher Sicherheit besonders flexibel nutzbar ist, insbesondere dadurch, dass er eine besonders große Zahl verschiedener vorteilhafter Eigenschaften und/oder Funktionen in sich vereinigen kann.

Die Aufgabe wird gelöst durch einen Helm mit den Merkmalen des Anspruchs 1. Vorteilhafte Ausführungsformen der Erfindung ergeben sich aus den Unteransprüchen, der vorliegenden Beschreibung sowie den Figuren.

Der Helm, bei dem es sich insbesondere um einen Sporthelm oder um einen Arbeitsschutzhelm handeln kann, umfasst erfindungsgemäß einen Helmkörper aus zumindest einem ersten Material und einem von dem ersten Material verschiedenen zweiten Material. Dabei kann der Helmkörper eine zumindest im Wesentlichen konkav geformte Innenseite, die bei aufgesetztem Helm dem Kopf des Trägers des Helms zugewandt ist, und eine dazu entgegengesetzte, zumindest im Wesentlichen konvex geformte Außenseite aufweisen.

Erfindungsgemäß ist vorgesehen, dass der Helmkörper einen festen Schaum aus expandierten Schaumpartikeln des ersten Materials umfasst. Dadurch kann der Helmkörper das zentrale stoßabsorbierende Element des Helms bilden. Grundsätzlich kann der feste Schaum (in gewissem Umfang) elastisch verformbar sein. Vorzugsweise handelt es sich bei dem festen Schaum aber um einen Hartschaum, so dass der feste Schaum zumindest im Wesentlichen nur plastisch verformbar ist.

Der Schaum ist aus expandierten Schaumpartikeln gebildet. Bei diesen Schaumpartikeln, die zumindest im Wesentlichen Kugelform aufweisen können, handelt es sich um kleine Teilchen, insbesondere sogenannte Schaumperlen oder Beads.

Die Schaumpartikel können beispielsweise einen maximalen Durchmesser in der Größenordnung von Millimetern (0,5 bis 15 mm) aufweisen. Die Schaumpartikel können vorgeschäumt sein, d. h. bereits als Schaum, beispielsweise aus einem Mikrogranulat oder direkt aus der Schmelze eines schäumbaren Materials, insbesondere eines Polymers, ausgebildet sein. Dabei weisen die Schaumpartikel zunächst eine vergleichsweise dichte Struktur (kleine Zellen) auf und können, insbesondere durch Zuführen von Wärme, dazu gebracht werden, zu expandieren.

Wenn ein definierter Raum einer bestimmten Form mit solchen noch nicht (vollständig) expandierten Schaumpartikeln zumindest weitgehend ausgefüllt wird und die Schaumpartikel dann zum Expandieren gebracht werden, dehnen sie sich in die verbleibenden Zwischenräume aus, insbesondere derart, dass sie letztlich den gesamten Raum einnehmen. Typischerweise werden die expandierenden Schaumpartikel dabei gegeneinander gedrängt, so dass sie aneinander haften, miteinander verkleben oder sogar fusionieren. Dazu trägt auch bei, dass sie während der Expansion vorübergehend ihre feste Form verlieren und weich werden. Dabei können die Schaumpartikel, insbesondere wenn ihnen für das Expandieren Wärme zugeführt wird, zumindest teilweise auch schmelzen. Vorzugsweise werden die Schaumpartikel infolge des Expandierens (und des dabei erfolgenden Aufweichens bzw. Schmelzens) stoffschlüssig miteinander verbunden, insbesondere indem sie zumindest teilweise miteinander verschmelzen. Die expandierten Schaumpartikel bilden dann (gegebenenfalls nachdem sie abgekühlt sind) einen durchgehenden Formkörper aus festem Schaum, der die Form des definierten Raumes aufweist, innerhalb dessen die Schaumpartikel zum Expandieren gebracht wurden.

Der Helmkörper umfasst zumindest einen solchen festen Schaum. Grundsätzlich kann der Helmkörper auch mehrere voneinander räumlich gegeneinander abgegrenzte, gegebenenfalls separat voneinander hergestellte, feste Schäume umfassen. Dabei kann vorgesehen sein, dass alle diese Schäume aus expandierten Schaumpartikeln desselben Materials gebildet sind oder dass ein oder mehrere dieser Schäume aus expandierten Schaumpartikeln eines anderen Materials gebildet sind als ein oder mehrere andere dieser Schäume.

Dass der feste Schaum aus expandierten Schaumpartikeln gebildet ist, ist nicht ausschließlich gemeint. Vielmehr kann der feste Schaum aus mehr als nur expandierten Schaumpartikeln bestehen. Beispielsweise können in den festen Schaum Partikel, wie etwa Flakes oder Fasern (vgl. unten), eingebettet sein.

Erfindungsgemäß ist vorgesehen, dass der Helmkörper ferner Partikel des zweiten Materials umfasst, die mit zumindest einigen der expandierten Schaumpartikel des ersten Materials eine haftende Verbindung aufweisen.

"Partikel" ist dabei als Sammelbegriff für Teile oder Teilchen zu verstehen. Bei den Partikeln kann es sich insbesondere um Granulat, Beads, Schaumpartikel, Fasern, Flakes, Formteile, Textilteile oder dergleichen handeln. Vorzugsweise sind die Partikel dabei klein im Vergleich zum Helmkörper als Ganzes. Insbesondere kann vorgesehen sein, dass die Partikel jeweils ein Volumen aufweisen, das höchstens einem Zehntel, vorzugweise höchstens einem Zwanzigstel, insbesondere höchstens einem Fünfzigstel, des Volumens des gesamten Helmkörper entspricht. Die Partikel können aber auch noch wesentlich kleiner sein. Dabei können die Partikel untereinander verbunden sein, auch stoffschlüssig, so dass sie zwar gemeinsam eine größere Struktur bilden können. Vorzugsweise sind die Partikel jedoch auch dann, wenn sie sich zu einer solchen größeren Struktur zusammengeschlossen haben, noch strukturell voneinander unterscheidbar, wie es beispielsweise bei den untereinander verbundenen Schaumpartikeln eines aus ihnen gebildeten festen Schaums typischerweise der Fall ist.

Bei der haftenden Verbindung zwischen den Partikeln des zweiten Materials und den Schaumpartikeln des ersten Materials handelt es sich vorzugsweise um eine dauerhafte Verbindung. Dabei kann die haftende Verbindung insbesondere insofern dauerhaft sein, als sie sich nicht ohne Beschädigung des Helmkörpers lösen lässt.

Ferner ist die haftende Verbindung zwischen den Partikeln des zweiten Materials und den expandierten Schaumpartikeln des ersten Materials insbesondere eine unmittelbare Verbindung ohne zusätzliches Haftmittel, wie etwa Klebstoff oder dergleichen. Vielmehr ergibt sich das Haften vorzugsweise daraus, dass die jeweiligen Partikel des zweiten Materials und die jeweiligen Schaumpartikel des ersten Materials in direktem Kontakt zueinander unmittelbar miteinander wechselwirken. Insbesondere können die Partikel des zweiten Materials flächig an den jeweiligen Schaumpartikeln des ersten Materials haften.

Vorzugsweise sind die Partikel des zweiten Materials mit zumindest einigen der expandierten Schaumpartikel des ersten Materials stoffschlüssig verbunden. Dieser Stoffschluss kann sich insbesondere aus einem Expandieren der Schaumpartikel des ersten Materials in unmittelbarem Kontakt zu den Partikeln des zweiten Materials ergeben. Die an Partikeln des zweiten Materials angrenzenden Schaumpartikel des ersten Materials können dabei während des Expandierens, gegebenenfalls infolge eines Zuführens von Wärme, mit dem jeweiligen Partikel des zweiten Materials verschmelzen oder verkleben.

Insofern ist es bevorzugt, wenn die Schaumpartikel des ersten Materials und die Partikel des zweiten Materials gemeinsam zu dem Helmkörper geformt werden. Das kann insbesondere entsprechend der genannten Technik erfolgen, bei der die Schaumpartikel des ersten Materials innerhalb einer Form, insbesondere durch Zuführen von Wärme, dazu gebracht werden, zu expandieren und so letztlich ein der Form entsprechendes Formteil aus festem Schaum zu bilden. Typischerweise wird die Wärme dabei in Form von Wasserdampf zugeführt. Um ein gemeinsames Formen der Schaumpartikel des ersten Materials und der Partikel des zweiten Materials für verschiedene Materialien zu ermöglichen, ist es jedoch bevorzugt, dass die Wärme in Form von Infrarotstrahlung zugeführt wird. Beispielsweise kann dabei sowie bei dem nachstehend beschriebenen Verfahren der feste Schaum entsprechend einer der in WO 2017/109079 A1 beschriebenen Weisen erzeugt werden.

Ein Verfahren zum Herstellen des Helms kann umfassen: dass Schaumpartikel eines ersten Materials in eine gemeinsame Form eingefüllt werden; dass Partikel eines von dem ersten Material verschiedenen zweiten Materials in die gemeinsame Form eingefüllt werden; dass die Schaumpartikel des ersten Materials und die Partikel des zweiten Materials in der gemeinsamen Form (Gießform, *Mold*) gemeinsam zu einem Helmkörper des Helms geformt werden; wobei dieses Formen umfasst, dass die Schaumpartikel des ersten Materials zum Expandieren gebracht werden, so dass sich die Schaumpartikel miteinander zu einem festen Schaum verbinden, den der Helmkörper umfasst, und dass zumindest einige der Partikel des zweiten Materials mit zumindest einigen der expandierten Schaumpartikel des ersten Materials eine haftende Verbindung eingehen, insbesondere sich stoffschlüssig verbinden.

Das Verfahren ist dabei nicht auf eine bestimmte Reihenfolge eingeschränkt, in der die Schaumpartikel des ersten Materials und die Partikel des zweiten Materials in die gemeinsame Form eingefüllt werden. Grundsätzlich können sie auch gleichzeitig oder zumindest zeitlich überlappend eingefüllt werden. Dass die Schaumpartikel des ersten Materials und die Partikel des zweiten Materials gemeinsam geformt werden, meint insbesondere, dass sie gemeinsam zu dem Helmkörper des Helms (oder jedenfalls einem Teil davon) geformt werden, und umfasst zumindest die beiden genannten Verfahrensschritte. Das gemeinsame Formen kann insofern auch als Ko-Formen oder Co-Molding bezeichnet werden und insbesondere zumindest im Wesentlichen nach der genannten Technik zur Ausbildung eines Formteils aus einem festen Schaum durchgeführt werden.

Dabei werden zumindest die Schaumpartikel des ersten Materials zum Expandieren gebracht, wodurch sie sich miteinander zu dem genannten festen Schaum verbinden, wodurch nicht ausgeschlossen wird, dass der feste Schaum weitere Bestandteile enthält, nämlich insbesondere die Partikel des zweiten Materials, die in dem festen Schaum eingebettet sein können. Die Schaumpartikel des ersten Materials können dabei insbesondere fest aneinander haften oder verschmelzen. Insbesondere verbinden sie sich dabei untereinander stoffschlüssig.

Grundsätzlich können auch die Partikel des zweiten Materials als Schaumpartikel ausgebildet sein und bei dem genannten gemeinsamen Formen ebenfalls zum Expandieren gebracht werden. In diesem Fall verbinden sich nicht nur die Schaumpartikel des ersten Materials miteinander zu einem festen Schaum, den der Helmkörper umfasst, sondern auch die Schaumpartikel des zweiten Materials verbinden sich miteinander zu einem weiteren festen Schaum, den der Helmkörper umfasst. Der aus den Schaumpartikeln des ersten Materials gebildete feste Schaum und der aus den Schaumpartikeln des zweiten Materials gebildete weitere feste Schaum können dabei entlang einer oder mehrerer Grenzflächen unmittelbar aneinander angrenzen und/oder innerhalb eines oder mehrerer Grenzbereiche zumindest teilweise durchmischt überlappen. Entlang einer jeweiligen Grenzfläche bzw. innerhalb eines jeweiligen Grenzbereichs kann die haftende Verbindung, die die Partikel des zweiten Materials mit den expandierten Schaumpartikeln des ersten Materials eingehen, dann grundsätzlich derjenigen Art von Verbindung entsprechen, die die Schaumpartikel des ersten Materials untereinander eingehen sowie die Schaumpartikel des zweiten Materials untereinander eingehen.

Es kann aber auch sein, dass die Partikel des zweiten Materials nicht ebenfalls als Schaumpartikel ausgebildet sind und sich auch nicht unbedingt expandieren lassen. In diesem Fall führt das Expandieren der Schaumpartikeln des ersten Materials in der gemeinsamen Form zusammen mit den Partikeln des zweiten Materials vorteilhafterweise jedenfalls dazu, dass zumindest einige der Partikel des zweiten Materials mit zumindest einigen der expandierten Schaumpartikeln des ersten Materials die genannte haftende Verbindung eingehen. Diese haftende, insbesondere stoffschlüssige, Verbindung kann beispielsweise daraus resultieren, dass expandierte Schaumpartikel des ersten Materials und Partikel des zweiten Materials, etwa aufgrund zugeführter Wärme, zumindest teilweise verschmelzen. Es kann auch ausreichen, dass nur Schaumpartikel des ersten Materials beim Expandieren aufweichen und gegen Partikel des zweiten Materials gedrängt werden, wodurch sie an den Partikeln des zweiten Materials festkleben.

Die Erfindung bezieht sich auch auf einen durch Ausführen des genannten Verfahrens erhältlichen Helm, wobei sich das Verfahren nicht auf die genannten Verfahrensschritte beschränken muss, sondern weitere Verfahrensschritte zur Herstellung des Helms, insbesondere weiterer Teile des Helms, umfassen kann. Die vorstehend sowie im Folgenden beschriebenen Ausbildungsmöglichkeiten des erfindungsgemäßen Helms beziehen sich gleichermaßen auch auf den durch das genannte Verfahren erhältlichen Helm.

Gemäß einer vorteilhaften Ausführungsform ist das erste Material ein expandierbarer Kunststoff. Grundsätzlich kommt dabei jeder Kunststoff in Betracht, aus dem sich expandierbare Schaumpartikel und daraus dann Formteile erzeugen lassen. Insbesondere kann es sich bei den expandierten Schaumpartikeln des ersten Materials um expandiertes Polystyrol (EPS), expandiertes Polypropylen (EPP), expandiertes Acrylnitril-Butadien-Styrol-Copolymer (EABS), expandiertes Polycarbonat (EPC), expandiertes Polyamid (EPA), expandiertes Polybutylenterephthalat (EPBT), expandiertes Polyethylenterephthalat (EPET), expandierten modifizierten Polyphenylenether (EmPPE), expandiertes thermoplastisches Polyurethan (ET-PU), expandiertes Polyoxymethylen (EPOM), expandiertes Polymethylmethacrylat (EPMMA) und/oder expandiertes Polyetherketon (EPEK) handeln.

Gemäß einer weiteren vorteilhaften Ausführungsform handelt es sich (wie in Bezug auf das Verfahren bereits als Möglichkeit erläutert) bei den genannten Partikeln des zweiten Materials um Schaumpartikel, wobei der Helmkörper einen weiteren festen Schaum aus expandierten Schaumpartikeln des zweiten Materials umfasst.

Die Schaumpartikel des zweiten Materials können zumindest im Wesentlichen zu den Schaumpartikeln des ersten Materials gleichartig ausgebildet sein, d. h. sich von den Schaumpartikeln des ersten Materials zumindest im Wesentlichen nur durch das jeweilige Material unterscheiden. Insbesondere können die Schaumpartikel des zweiten Materials entsprechend den Schaumpartikeln des ersten Materials infolge eines Expandierens aneinander haften, miteinander verklebt sein oder, insbesondere wenn ihnen für das Expandieren Wärme zugeführt worden ist, zumindest teilweise verschmolzen sein. Vorzugsweise sind die Schaumpartikel des zweiten Materials untereinander stoffschlüssig verbunden. Die Schaumpartikel des zweiten Materials können zumindest im Wesentlichen Kugelform aufweisen, insbesondere als Schaumperlen oder Beads ausgebildet sein, und beispielsweise einen maximalen Durchmesser in der Größenordnung von Millimetern (insbesondere im Bereich von 0,5 bis 15 mm) aufweisen. Wie bei dem aus den Schaumpartikeln des ersten Materials gebildeten festen Schaum handelt es sich auch bei dem aus den Schaumpartikeln des zweiten Materials gebildeten weiteren festen Schaum vorzugsweise um einen Hartschaum.

Der aus Schaumpartikeln des zweiten Materials gebildete weitere feste Schaum muss nicht unbedingt nur die Schaumpartikel des zweiten Materials umfassen, sondern kann auch weitere Bestandteile enthalten, vorzugweise jedoch (ggf. außer in den genannten Grenzbereichen) keine Schaumpartikel des ersten Materials. Insofern sind der aus den Schaumpartikeln des ersten Materials gebildete feste Schaum (der auch als erster fester Schaum bezeichnet werden könnte) und der aus den Schaumpartikeln des zweiten Materials gebildete weitere feste Schaum (der auch als zweiter fester Schaum bezeichnet werden könnte) zwar miteinander verbunden und vorzugsweise auch gemeinsam hergestellt, aber (ggf. außer in den genannten Grenzbereichen) räumlich gegeneinander abgegrenzt.

Diese Ausführungsform ermöglicht es, dass der Helmkörper des Helms durchgehend aus festem Schaum gebildet sein kann, dabei jedoch Bereiche mit festem Schaum aus Schaumpartikeln des ersten Materials und andere Bereiche mit festem Schaum aus Schaumpartikeln des zweiten Materials aufweisen kann, so dass verschiedene Bereiche des Helmkörper verschiedene Eigenschaften, beispielsweise für den jeweiligen Bereich optimierte Stoßabsorptionseigenschaften, aufweisen können. Vorteilhafterweise ist dieser Helmkörper dabei durch gemeinsames Formen der festen Schäume aus den verschiedenen Materialien in einer gemeinsamen Form herstellbar. Das kann insbesondere dadurch möglich sein, dass verschiedene Bereiche der gemeinsamen Form mit Schaumpartikeln verschiedenen Materials gefüllt werden, die dann vergleichsweise schnell durch Erhitzen, insbesondere mittels Infrarotstrahlung, dazu gebracht werden, zu expandieren, ohne den jeweiligen Bereich dabei zu verlassen. Auf diese Weise brauchen die Schaumpartikel des ersten Materials und die Schaumpartikel des zweiten Materials in der gemeinsamen Form vorteilhafterweise nicht unbedingt durch Wände, Schieber oder ähnliches voneinander getrennt zu werden. Beim Expandieren verbinden sich daher nicht nur die Schaumpartikel des ersten Materials untereinander und die Schaumpartikel des zweiten Materials untereinander zu einem den jeweiligen Bereich zumindest im Wesentlichen vollständig ausfüllenden festen Schaum, sondern auch die verschiedenen, aus den verschiedenen expandierten Schaumpartikeln gebildeten festen Schäume verbinden sich zumindest haftend, vorzugweise stoffschlüssig, miteinander.

Gemäß einer vorteilhaften Ausführungsform umfasst der Helmkörper zumindest einen ersten Abschnitt, der den festen Schaum aus expandierten Schaumpartikeln des ersten Materials, jedoch nicht den weiteren festen Schaum aus expandierten Schaumpartikeln des zweiten Materials aufweist, sowie zumindest einen von dem ersten Abschnitt separaten zweiten Abschnitt, der den weiteren festen Schaum aus expandierten Schaumpartikeln des zweiten Materials, jedoch nicht den festen Schaum aus expandierten Schaumpartikeln des ersten Materials aufweist. Der erste Abschnitt und der zweite Abschnitt des Helmkörpers können jeweils einem der vorstehend genannten Bereiche entsprechen. Vorzugsweise gehen die Ausmaße des ersten Abschnitts und des zweiten Abschnitts jeweils wesentlich über die Ausmaße eines einzelnen Schaumpartikels des ersten Materials bzw. des zweiten Materials hinaus. Insbesondere kann vorgesehen sein, dass sich der erste Abschnitt und der zweite Abschnitt jeweils in zumindest eine Raumrichtung über mindestens 1 cm, vorzugweise mindestens 2 cm, insbesondere mindestens 3 cm, erstrecken.

Gemäß einer vorteilhaften Weiterbildung dieser Ausführungsform sind der erste Abschnitt und der zweite Abschnitt durch einen Grenzabschnitt voneinander abgegrenzt, innerhalb dessen der feste Schaum aus expandierten Schaumpartikeln des ersten Materials und der weitere feste Schaum aus expandierten Schaumpartikeln des zweiten Materials eine haftende Verbindung aufweisen. Es können auch mehrere solche Grenzabschnitte vorgesehen sein. Dieser Grenzabschnitt kann insbesondere einer Grenzfläche oder einem Grenzbereich entsprechen, wie sie weiter oben beschrieben worden sind.

Die haftende Verbindung ergibt sich vorzugsweise unmittelbar zwischen einem oder mehreren expandierten Schaumpartikeln des ersten Materials und einem oder mehreren expandierten Schaumpartikeln des zweiten Materials, insbesondere klebstofffrei, also ohne, dass dazu ein zusätzliches Haftmittel, wie etwa ein Klebstoff, vorgesehen ist, sondern vorteilhafterweise als direkte Folge des gemeinsamen Formens. Vorzugsweise ist die haftende Verbindung dauerhaft, so dass sie sich nicht ohne Beschädigung des Helmkörpers lösen lässt.

Ferner ist es bevorzugt, dass der feste Schaum aus expandierten Schaumpartikeln des ersten Materials und der weitere feste Schaum aus expandierten Schaumpartikeln des zweiten Materials innerhalb des Grenzabschnitts stoffschlüssig mit einander verbunden sind. Dazu können dort, wo sich ein oder mehrere Schaumpartikel des ersten Materials und ein oder mehrere Schaumpartikel des zweiten Materials in direktem Kontakt zueinander befinden, diese zumindest teilweise miteinander verschmolzen sein.

Wenn der Helmkörper einen weiteren festen Schaum aus expandierten Schaumpartikeln des zweiten Materials umfasst, ist es vorteilhaft, wenn das zweite Material ein expandierbarer Kunststoff ist. Grundsätzlich kommt dabei wie für das erste Material jeder Kunststoff in Betracht, aus dem sich expandierbare Schaumpartikel und daraus dann Formteile erzeugen lassen. Insbesondere kann es sich bei den expandierten Schaumpartikeln des zweiten Materials um expandiertes Polystyrol (EPS), expandiertes Polypropylen (EPP), expandiertes Acrylnitril-Butadien-Styrol-Copolymer (EABS), expandiertes Polycarbonat (EPC), expandiertes Polyamid (EPA), expandiertes Polybutylenterephthalat (EPBT), expandiertes Polyethylenterephthalat (EPET), expandierten modifizierten Polyphenylenether (EmPPE), expandiertes thermoplastisches Polyurethan (ETPU), expandiertes Polyoxymethylen (EPOM), expandiertes Polymethylmethacrylat (EPMMA) und/oder expandiertes Polyetherketon (EPEK) handeln.

Gemäß einer weiteren vorteilhaften Ausführungsform ist das zweite Material ein Naturstoff. Vorzugsweise handelt es sich bei dem zweiten Material um einen in der genannten Weise formbaren, insbesondere schäumbaren, bevorzugt expandierbaren, Naturstoff. Dabei kommt insbesondere ein Korkmaterial in Betracht, so dass es sich bei den Partikeln des zweiten Materials beispielsweise um ein Korkgranulat handeln kann. Ein solches Material kann sich ähnlich den Schaumpartikeln des ersten Materials gemeinsam mit diesen in einer gemeinsamen Form formen lassen (insbesondere dabei auch expandieren), um den Helmkörper auszubilden.

Vorzugsweise gehen die Partikel des zweiten Materials dabei untereinander sowie mit angrenzenden expandierten Schaumpartikeln des ersten Materials eine unmittelbar, insbesondere klebstofffrei, haftende Verbindung ein.

Bei den Partikeln des zweiten Materials kann es sich aber auch um größere, insbesondere bereits geformte Strukturen aus dem jeweiligen Naturstoff handeln. Beispielsweise kann es sich um Formteile aus einem Korkmaterial handeln. Der aus den Schaumpartikeln des ersten Materials gebildete feste Schaum kann sich dann zumindest teilweise um ein solches Formteil herum erstrecken, wobei die Schaumpartikel des ersten Materials mit dem Formteil unmittelbar haftend, vorzugsweise sogar stoffschlüssig, verbunden sind.

Des Weiteren ist es denkbar, dass die Partikel des zweiten Materials als Flakes (Flocken, Büschel) ausgebildet sind. Diese Flakes können kleine Stücke eines Stoffes sein, bei dem es sich beispielsweise um ein geschreddertes Schalenmaterial handeln kann. Als Material kommen dabei insbesondere Polycarbonat (PC) und Polyethylenterephthalat (PET) in Betracht. Vorzugsweise handelt es sich um ein recyceltes Material.

Gemäß einer weiteren vorteilhaften Ausführungsform handelt es sich bei den genannten Partikeln des zweiten Materials um Fasern. Dabei kommen für diese Fasern alle Arten von Kunst- oder Naturfasern in Betracht. Insbesondere kann das zweite Material ein Glasmaterial oder ein Kohlenstoffmaterial sein. Insofern kann es sich bei den genannten Fasern also um Glasfasern oder um Kohlefasern handeln.

Die Partikel des zweiten Materials können zum Beispiel als ein Textil ausgebildet sein. Beispielsweise ist denkbar, dass sie Stücke eines textilen Stoffes, etwa eines Gewebes, oder eines textilen Flächengebildes, etwa eines Filzes, sind. Ähnlich wie vorstehend für die Formteile aus einem Naturstoff beschrieben kann sich der aus den Schaumpartikeln des ersten Materials gebildete feste Schaum dann zumindest teilweise um ein jeweiliges derartiges Gewebestück, Filzstück oder sonstiges aus den Fasern gebildetes Textilstück herum erstrecken, wobei die expandierten Schaumpartikel des ersten Materials mit dem jeweiligen Textilstück unmittelbar haftend, vorzugweise sogar stoffschlüssig, verbunden sind.

Die Partikel des zweiten Materials können aber auch als einzelne Flakes, Fasern oder Faserbündel vorliegen. In dieser Form können die Partikel des zweiten Materials jeweils einzeln zwischen Schaumpartikeln des ersten Materials angeordnet sein. Die Partikel des zweiten Materials sind insofern unter die Schaumpartikel des ersten Materials untergemischt. Die Partikel des zweiten Materials können dabei aufgrund der haftenden Verbindung mit vorzugsweise jeweils mehreren expandierten Schaumpartikeln des ersten Materials die Verbindung der expandierten Schaumpartikel des ersten Materials untereinander noch zusätzlich unterstützen, insbesondere indem sie zusätzliche Querverbindungen zwischen den Schaumpartikeln schaffen. Auf diese Weise kann der feste Schaum aus den expandierten Schaumpartikeln des ersten Materials durch die Beifügung der Partikel des zweiten Materials vorteilhafterweise verstärkt werden.

Insbesondere in diesem Zusammenhang, aber auch grundsätzlich unabhängig davon, ob es sich bei den Partikeln des zweiten Materials um Flakes, Fasern oder andersartige Teile handelt, ist es gemäß einer weiteren Ausführungsform ferner vorteilhaft, wenn der Helmkörper zumindest einen Abschnitt aufweist, in dem die Partikel des zweiten Materials zumindest teilweise in den festen Schaum aus expandierten Schaumpartikeln des ersten Materials eingebettet sind. Die Partikel des zweiten Materials können dabei insbesondere insofern in den festen Schaum eingebettet sein, als die Partikel des zweiten Materials einzeln oder in Gruppen - zumindest innerhalb einer jeweiligen Ebene (zweidimensional; beispielsweise ringförmig), vorzugsweise vollständig in alle Raumrichtungen (dreidimensional) - von dem festen Schaum aus expandierten Schaumpartikeln des ersten Materials umschlossen sind. Auf diese Weise sind die Partikel des zweiten Materials und die expandierten Schaumpartikel des ersten Materials jeweils innerhalb einer besonders großen Grenzfläche bzw. eines besonders großen Grenzbereichs in Kontakt zueinander und können daher eine besonders umfassende haftende Verbindung miteinander aufweisen.

Die Erfindung wird im Folgenden lediglich beispielhaft unter Bezugnahme auf die Figuren weiter erläutert.
- Fig. 1: zeigt eine Ausführungsform eines erfindungsgemäßen Helms.
- Fig. 2: zeigt einige Schaumpartikel eines ersten Materials und einige als Schaumpartikel ausgebildete Partikel eines zweiten Materials, die entlang einer Grenzfläche aneinander angrenzen.
- Fig. 3: zeigt Schaumpartikel eines ersten Materials und als Schaumpartikel ausgebildete Partikel eines zweiten Materials, die in eine gemeinsame Form zur Ausbildung eines Helmkörpers eingefüllt sind und entlang eines Grenzbereichs aneinander angrenzen.
- Fig. 4: zeigt einige Schaumpartikel eines ersten Materials zusammen mit einigen als Fasern ausgebildeten Partikeln eines zweiten Materials.

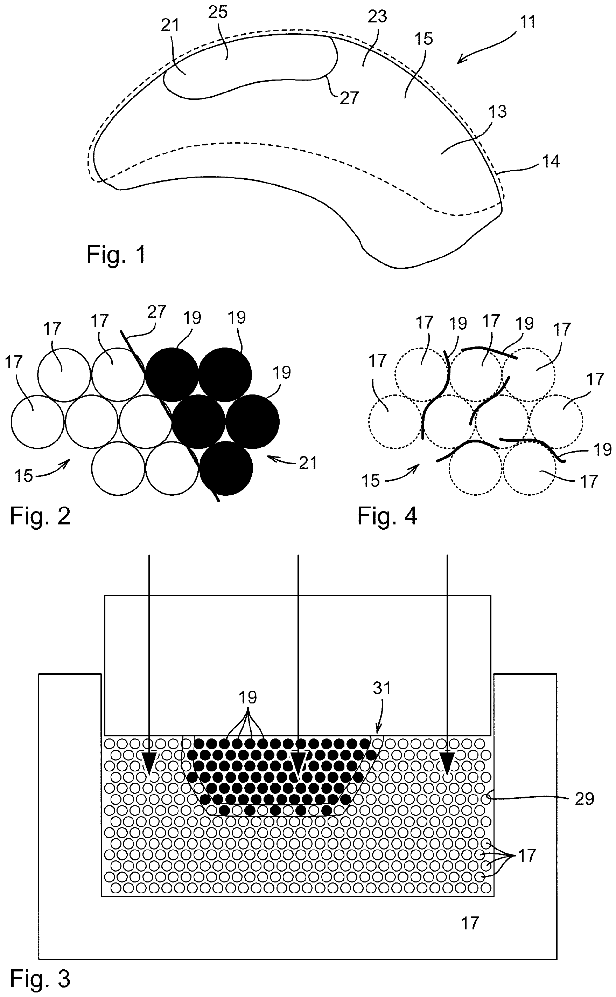

Die Figuren zeigen jeweils stark vereinfachte schematische Darstellungen zur Veranschaulichung der Erfindung. Dabei ist in Fig. 1 eine Ausführungsform eines erfindungsgemäßen Helms 11 mit einem Helmkörper 13 dargestellt, der einen festen Schaum 15 aus expandierten Schaumpartikeln 17 eines ersten Materials umfasst sowie ferner Partikel 19 eines zweiten Materials umfasst. Die Schaumpartikel 17 des ersten Materials und die Partikel 19 des zweiten Materials sind dabei aufgrund ihrer geringen Größe in Fig. 1 nicht zu erkennen. Der Helmkörper 13 weist eine zumindest im Wesentlichen konkav geformte (in Fig. 1 nach unten weisende) Innenseite auf, die bei aufgesetztem Helm 11 dem Kopf des Trägers des Helms 11 zugewandt ist. Außerdem weist der Helmkörper 13 eine dazu entgegengesetzte, zumindest im Wesentlichen konvex geformte (in Fig. 1 nach oben weisende) Außenseite auf.

Der Helm 11 umfasst zudem eine äußere Helmschale 14, die an der Außenseite des Helmkörper 13 angeordnet ist und diese zumindest im Wesentlichen vollständig überdeckt. Die Helmschale 14 ist in Fig. 1 durch eine unterbrochene Linie dargestellt. Sie kann insbesondere als Spritzgussteil aus einem spritzbaren Kunststoff, beispielsweise einem Acrylnitril-Butadien-Styrol-Copolymer (ABS), ausgebildet sein. Außerdem kann der Helm 11 weitere Elemente aufweisen, wie etwa Gurte zu seiner Befestigung, Polster für einen bequemen Sitz auf dem Kopf des jeweiligen Trägers etc., die nicht dargestellt sind.

Bei der gezeigten Ausführungsform umfasst der Helmkörper 13 nicht nur den festen Schaum 15 aus expandierten Schaumpartikeln 17 des ersten Materials, sondern einen weiteren festen Schaum 21 aus den Partikeln 19 des zweiten Materials, die bei dieser Ausführungsform ebenfalls als expandierte Schaumpartikel ausgebildet sind. Der feste Schaum 15 aus expandierten Schaumpartikeln 17 des ersten Materials kann beispielsweise zumindest im Wesentlichen aus expandiertem Polystyrol (EPS) bestehen, während der weitere feste Schaum aus den als expandierte Schaumpartikel ausgebildeten Partikeln 19 des zweiten Materials beispielsweise zumindest im Wesentlichen aus expandiertem Polypropylen (PPP) bestehen kann.

Dabei sind der feste Schaum 15 und der weitere feste Schaum 21 räumlich zumindest weitgehend separat voneinander ausgebildet. Dadurch umfasst der Helmkörper 13 einen ersten Abschnitt 23, der den festen Schaum 15 aus expandierten Schaumpartikeln 17 des ersten Materials, jedoch nicht den weiteren festen Schaum 21 aus den als expandierte Schaumpartikel ausgebildeten Partikeln 19 des zweiten Materials aufweist, sowie einen von dem ersten Abschnitt 23 separaten zweiten Abschnitt 25, der den weiteren festen Schaum 21 aus den als expandierte Schaumpartikel ausgebildeten Partikeln 19 des zweiten Materials, jedoch nicht den festen Schaum 15 aus expandierten Schaumpartikeln 17 des ersten Materials aufweist. Der erste Abschnitt 23 und der zweite Abschnitt 25 grenzen entlang einer Grenzfläche 27 aneinander an.

In Fig. 2 sind beispielhaft einige wenige expandierte Schaumpartikel 17 des ersten Materials sowie einige wenige als expandierte Schaumpartikel ausgebildete Partikel 19 des zweiten Materials gezeigt, die entlang der Grenzfläche 27 aneinander angrenzen. Damit die Darstellung nicht unübersichtlich wird, sind dabei (ebenso wie in den Fig. 3 und 4) nicht alle Schaumpartikel 17 des ersten Materials und alle Partikel 19 des zweiten Materials mit einem jeweiligen Bezugszeichen gekennzeichnet. Die Grenzfläche 27 ist als Strich dargestellt, der jedoch nur den Verlauf der Grenzfläche 27 veranschaulichen soll, aber keine gegenständliche Entsprechung in der Wirklichkeit hat.

In den Figuren sind die expandierten Schaumpartikel 17 des ersten Materials sowie die Partikel 19 des zweiten Materials, sofern sie als Schaumpartikel ausgebildet sind, jeweils vereinfacht als Kreise dargestellt, zwischen denen sich noch Zwischenräume befinden. Diese Darstellung dient dazu, die einzelnen expandierten Schaumpartikel voneinander unterscheidbar darzustellen. In Wirklichkeit sind die in Fig. 2 gezeigten Schaumpartikel 17 des ersten Materials und als Schaumpartikel ausgebildeten Partikel 19 des zweiten Materials beim Ausbilden des festen Schaums 15 bzw. des weiteren festen Schaums 21 derart expandiert, dass sämtliche Zwischenräume zwischen ihnen weitgehend ausgefüllt sind. Entsprechendes gilt für die in Fig. 4 gezeigten Schaumpartikel 17 des ersten Materials.

Durch das Expandieren, insbesondere durch die dabei zugeführte Wärme, sind die zumindest vorübergehend weich gewordenen Schaumpartikel mit ihren jeweiligen Nachbarn in engen Kontakt gelangt und dabei mit diesen eine haftende Verbindung eingegangen, die vorzugweise stoffschlüssig ist. Dadurch weisen nicht nur die expandierten Schaumpartikel 17 des ersten Materials sowie die als expandierte Schaumpartikel ausgebildeten Partikel 19 des zweiten Materials jeweils untereinander eine haftende Verbindung auf, sondern entlang der Grenzfläche 27 sind zumindest einige der expandierten Schaumpartikel 17 des ersten Materials mit zumindest einigen der als expandierte Schaumpartikel ausgebildeten Partikel 19 des zweiten Materials unmittelbar haftend, vorzugweise stoffschlüssig, verbunden.

In Fig. 3 ist die Herstellung des Helmkörpers 13 eines erfindungsgemäßen Helms 11 stark vereinfacht dargestellt. Dabei sind Schaumpartikel 17 des ersten Materials und als Schaumpartikel ausgebildete Partikel 19 des zweiten Materials in eine gemeinsame Form 29 eingefüllt, in der sie gemeinsam zu dem Helmkörper 13 geformt werden können. Die gemeinsame Form 29 ist dabei vereinfacht mit einem rechteckigen Querschnitt dargestellt. In Wirklichkeit entspricht die Form des Innenraums der gemeinsamen Form 29 jedoch zumindest im Wesentlichen der Form des Helmkörpers 13. Außerdem sind sowohl die Schaumpartikel 17 des ersten Materials als auch die als Schaumpartikel ausgebildeten Partikel 19 des zweiten Materials im Verhältnis zur gemeinsamen Form 29 wesentlich zu groß (und somit in zu geringer Anzahl) dargestellt, damit sie deutlich zu erkennen sind.

Die Schaumpartikel 17 des ersten Materials und die als Schaumpartikel ausgebildeten Partikel 19 des zweiten Materials sind innerhalb der gemeinsamen Form 29 in unterschiedlichen Bereichen angeordnet, die insbesondere dem genannten ersten Abschnitt 23 bzw. dem genannten zweiten Abschnitt 25 entsprechen können. Dabei können sich die Schaumpartikel innerhalb eines (in Fig. 3 durch zwei Linien gekennzeichneten) Grenzbereichs 31 zumindest teilweise durchmischt überlappen. Im Wesentlichen sind die mit unterschiedlichen Schaumpartikeln gefüllten Bereiche jedoch räumlich voneinander abgegrenzt.

Nach dem Einfüllen in die gemeinsame Form 29 und dem Schließen der gemeinsamen Form 29 werden die Schaumpartikel zum Expandieren gebracht, insbesondere durch Einwirkung von Infrarotstrahlung (vgl. Pfeile). Infolge des Expandierens bilden (gegebenenfalls nachdem der Inhalt der gemeinsamen Form 29 abgekühlt worden ist) die expandierten Schaumpartikel 17 des ersten Materials den festen Schaum 15 und die als expandierte Schaumpartikel ausgebildeten Partikel 19 des zweiten Materials den weiteren festen Schaum 21. Dabei sind der feste Schaum 15 und der weitere feste Schaum 21 im Grenzbereich 31 - aufgrund der unmittelbar haftenden, insbesondere formschlüssigen, Verbindung zwischen zumindest einigen der expandierten Schaumpartikel 17 des ersten Materials und zumindest einigen der als expandierte Schaumpartikel ausgebildeten Partikel 19 des zweiten Materials - fest miteinander verbunden.

Anders als in den Fig. 2 und 3 sind die in Fig. 4 gezeigten Partikel 19 des zweiten Materials nicht als Schaumpartikel, sondern als Flakes, Fasern oder Faserbündel ausgebildet. Dabei kann es sich insbesondere Rohmaterial wie um Glasfasern oder Kohlefasern bzw. Glasfaserbündel oder Kohlefaserbündel handeln, aber auch um Kunststoffpartikel, insbesondere um recycelte Materialien wie zum Beispiel geschreddertes Schalenmaterial aus Polycarbonat (PC) oder Polyethylenterephthalat (PET). Die Flakes, Fasern bzw. Faserbündel sind dabei nicht räumlich von den expandierten Schaumpartikeln 17 des ersten Materials abgegrenzt, sondern zumindest im Wesentlichen gleichmäßig zwischen den (in Fig. 4 gestrichelt dargestellten) expandierten Schaumpartikeln 17 des ersten Materials verteilt angeordnet. Dabei stören sie nicht die Ausbildung des festen Schaums 15 aus den expandierten Schaumpartikeln 17 des ersten Materials, sondern sind als integraler Bestandteil des festen Schaums 15 in diesen eingebettet.

Dabei weisen die als Flakes, Fasern oder Faserbündel ausgebildeten Partikel 19 des zweiten Materials mit zumindest einigen der expandierten Schaumpartikel 17 des ersten Materials eine haftende, insbesondere stoffschlüssige, Verbindung auf. Insbesondere können zumindest einige, vorzugsweise der überwiegende Teil, der Partikel 19 des zweiten Materials mit jeweils mehr als einem expandierten Schaumpartikel 17 des ersten Materials haftend verbunden sein, so dass die Schaumpartikel 17 des ersten Materials nicht nur unmittelbar aneinander haftend, sondern zumindest teilweise auch über die Partikel 19 des zweiten Materials untereinander verbunden sind. Auf diese Weise wird der feste Schaum 15 aus den expandierten Schaumpartikeln 17 des ersten Materials durch die darin eingebetteten Partikel 19 des zweiten Materials vorteilhaft verstärkt.

### Bezugszeichen

- 11: Helm
- 13: Helmkörper
- 14: Helmschale
- 15: fester Schaum
- 17: Schaumpartikel des ersten Materials
- 19: Partikel des zweiten Materials
- 21: weiterer fester Schaum
- 23: erster Abschnitt
- 25: zweiter Abschnitt
- 27: Grenzfläche
- 29: gemeinsame Form
- 31: Grenzbereich

## Patentansprüche

1. Helm (11), insbesondere Sporthelm oder Arbeitsschutzhelm, mit einem Helmkörper (13) aus zumindest einem ersten Material und einem von dem ersten Material verschiedenen zweiten Material,
wobei der Helmkörper (13) einen festen Schaum (15) aus expandierten Schaumpartikeln (17) des ersten Materials umfasst,
wobei der Helmkörper (13) ferner Partikel (19) des zweiten Materials umfasst, die mit zumindest einigen der expandierten Schaumpartikel (17) des ersten Materials eine haftende Verbindung aufweisen, insbesondere stoffschlüssig verbunden sind.

2. Helm, insbesondere Sporthelm oder Arbeitsschutzhelm, erhältlich durch Ausführen eines Verfahrens, welches umfasst:
- dass Schaumpartikel (17) eines ersten Materials in eine gemeinsame Form (29) eingefüllt werden;
- dass Partikel (19) eines von dem ersten Material verschiedenen zweiten Materials in die gemeinsame Form (29) eingefüllt werden;
- dass die Schaumpartikel (17) des ersten Materials und die Partikel (19) des zweiten Materials in der gemeinsamen Form (29) gemeinsam zu einem Helmkörper (13) des Helms (11) geformt werden;
wobei dieses Formen umfasst:
- dass die Schaumpartikel (17) des ersten Materials zum Expandieren gebracht werden, so dass sich die Schaumpartikel (17) miteinander zu einem festen Schaum (15) verbinden, den der Helmkörper (13) umfasst; und
- dass zumindest einige der Partikel (19) des zweiten Materials mit zumindest einigen der expandierten Schaumpartikel (17) des ersten Materials eine haftende Verbindung eingehen, insbesondere sich stoffschlüssig verbinden.

3. Helm nach Anspruch 1 oder 2,
wobei das erste Material ein expandierbarer Kunststoff ist, wobei es sich bei den expandierten Schaumpartikeln (17) des ersten Materials vorzugsweise um expandiertes Polystyrol (EPS), expandiertes Polypropylen (EPP), expandiertes Acrylnitril-Butadien-Styrol-Copolymer (EABS), expandiertes Polycarbonat (EPC), expandiertes Polyamid (EPA), expandiertes Polybutylenterephthalat (EPBT), expandiertes Polyethylenterephthalat (EPET), expandierten modifizierten Polyphenylenether (EmPPE), expandiertes thermoplastisches Polyurethan (ETPU), expandiertes Polyoxymethylen (EPOM), expandiertes Polymethylmethacrylat (EPMMA) und/oder expandiertes Polyetherketon (EPEK) handelt.

4. Helm nach einem der vorstehenden Ansprüche,
wobei es sich bei den genannten Partikeln (19) des zweiten Materials um Schaumpartikel handelt, und
wobei der Helmkörper (13) einen weiteren festen Schaum (21) aus expandierten Schaumpartikeln des zweiten Materials umfasst.

5. Helm nach Anspruch 4,
wobei der Helmkörper (13) zumindest einen ersten Abschnitt (23) umfasst, der den festen Schaum (15) aus expandierten Schaumpartikeln (17) des ersten Materials, jedoch nicht den weiteren festen Schaum (21) aus expandierten Schaumpartikeln des zweiten Materials aufweist, sowie zumindest einen von dem ersten Abschnitt (23) separaten zweiten Abschnitt (25) umfasst, der den weiteren festen Schaum (21) aus expandierten Schaumpartikeln des zweiten Materials, jedoch nicht den festen Schaum (15) aus expandierten Schaumpartikeln (17) des ersten Materials aufweist.

6. Helm nach Anspruch 5,
wobei der erste Abschnitt (23) und der zweite Abschnitt (25) durch einen Grenzabschnitt (27, 31) voneinander abgegrenzt sind, innerhalb dessen der feste Schaum (15) aus expandierten Schaumpartikeln (17) des ersten Materials und der weitere feste Schaum (21) aus expandierten Schaumpartikeln des zweiten Materials eine haftende Verbindung aufweisen, insbesondere stoffschlüssig miteinander verbunden sind.

7. Helm nach einem der Ansprüche 4 bis 6,
wobei das zweite Material ein expandierbarer Kunststoff ist, wobei es sich bei den expandierten Schaumpartikeln des zweiten Materials vorzugsweise um expandiertes Polystyrol (EPS), expandiertes Polypropylen (EPP), expandiertes Acrylnitril-Butadien-Styrol-Copolymer (EABS), expandiertes Polycarbonat (EPC), expandiertes Polyamid (EPA), expandiertes Polybutylenterephthalat (EPBT), expandiertes Polyethylenterephthalat (EPET), expandierten modifizierten Polyphenylenether (EMPPE), expandiertes thermoplastisches Polyurethan (ETPU), expandiertes Polyoxymethylen (EPOM), expandiertes Polymethylmethacrylat (EPMMA) und/oder expandiertes Polyetherketon (EPEK) handelt.

8. Helm nach einem der Ansprüche 1 bis 6,
wobei das zweite Material ein Naturstoff, insbesondere ein Korkmaterial, ist.

9. Helm nach einem der Ansprüche 1 bis 3,
wobei es sich bei den genannten Partikeln (19) des zweiten Materials um Fasern handelt.

10. Helm nach Anspruch 9,
wobei das zweite Material ein Glasmaterial oder ein Kohlenstoffmaterial ist.

11. Helm nach einem der vorstehenden Ansprüche,
wobei der Helmkörper (13) zumindest einen Abschnitt aufweist, in dem die Partikel (19) des zweiten Materials zumindest teilweise in den festen Schaum (15) aus expandierten Schaumpartikeln (17) des ersten Materials eingebettet sind.
